# EUROPÄISCHE PATENTSCHRIFT

(11) **EP 0 660 792 B1**
(45) Veröffentlichungstag und Bekanntmachung des Hinweises auf die Patenterteilung: **06.03.1996**
(21) Anmeldenummer: 93918953.6
(22) Anmeldetag: 06.09.1993
(51) Int. Cl.: B65D 25/28, B29C 45/00

(54) **SPRITZGEGOSSENER KUNSTSTOFFEIMER**
INJECTION MOLDED PLASTIC BUCKET
SEAU EN PLASTIQUE MOULE PAR INJECTION

(30) Priorität: 15.09.1992 DE 4230788
(43) Veröffentlichungstag der Anmeldung: 05.07.1995
(73) Patentinhaber: Jokey Plastik Wipperfürth GmbH, D-51688 Wipperfürth (DE)
(72) Erfinder: GEORGIADIS, Robert, Guido, D-51429 Bergisch Gladbach (DE)
(74) Vertreter: Stachow, E.-W., Prof. Dr.
(86) Internationale Anmeldenummer: DE9300816
(87) Internationale Veröffentlichungsnummer: WO9406694

(56) Entgegenhaltungen:
- GB-A- 1 388 331
- US-A- 3 861 840
- US-A- 4 125 246
- US-A- 4 172 577
- US-A- 4 476 083
- US-A- 4 632 357

## Beschreibung

Die Erfindung betrifft einen spritzgegossenen Kunststoffeimer mit einem Boden, einer sich von diesem zum oberen Rand hin konisch erweiternden Wand und mit einem Tragebügel, wobei der obere Rand der Wand an diametral gegenüberliegenden Stellen mit Aufnahmeelementen für einen Tragebügel versehen ist, die aus am oberen Rand nach außen ragende angeformte Zapfen bestehen, die endseitig mit Sicherungselementen zur Verhinderung des seitlichen Herausrutschens der Tragebügelösen versehen sind und die von je einer mit dem Tragebügel verbundenen Tragebügelöse umringt werden.

Kunststoffeimer der eingangs genannten Art werden meist in Massenproduktion hergestellt. Werden die Tragebügel getrennt von dem Eimer gefertigt, erfordert deren Anbringen einen erheblichen Aufwand, da dafür ein zusätzlicher Einbügelvorgang nötig ist, der zusätzlich Einbügelautomaten erfordert.

Aus diesem Grunde geht das Bestreben dahin, Tragebügel und Eimer in einem einzigen Arbeitsgang herzustellen. Dazu ist aus der DE-A-35 40 059 ein Eimer mit angelenktem Bügelgriff bekannt, der mittels Knöpfen an den Griffenden an gegenüberliegenden Seiten des Eimers in einstückig angeformten Griffhaltekäfigen gehaltert ist.

Diese Form ermöglicht ein einstückiges Herstellen des Eimers, was durch eine Gießform erreicht wird, die neben den bei Gießformen allgemein bekannten Formenhälften mehrere Schieber zur Bildung der Griffhaltekäfige und der Griffknöpfe aufweisen.

Bei der Formung sind auf jeder Seite zwei Schieber erforderlich, die seitlich in den Raum für die Griffhaltekäfige eintauchen, um die Knöpfe zu formen. Zusätzlich sind je zwei Schieber einzusetzen, um die Hinterschnitte an den Bügelknöpfen zu formen.

Nachteilig ist bei dieser bekannten Lösung, daß die erforderlichen Schieber zur Bildung der Griffhaltekäfige und der Griffknöpfe einen hohen technischen Aufwand erfordern und sehr hohe Werkzeugkosten erzwingen. Außerdem ist eine Umrüstung der Gießform, etwa für den Fall, daß Eimer ohne Bügel hergestellt werden sollen, da der Einsatz eines Metallbügels erforderlich ist, nicht möglich.

Eine weitere bekannte Lösung offenbart die US-A-4 125 246, die eine Form für einen Kunststoffeimer beschreibt, die vorsieht, daß der Bügel für den Kunststoffeimer in der Trennung zwischen Matrize und Patrize geformt wird. An den Stellen der Aufnahmeelemente sind an dem oberen Rand nach außen ragende Zapfen angeformt. Diese Zapfen werden von je einer mit dem Tragebügel verbundenen Tragebügelöse umringt.

Die Zapfen sind endseitig mit Sicherungselementen zur Verhinderung des seitlichen Herausrutschens der Tragebügelösen versehen und weisen einen inneren Hohlraum auf.

Die Sicherungselemente werden dabei entweder dadurch realisiert, daß die Zapfen außen liegende Nasen aufweisen oder konisch erweitert sind. Die Formgebung der Zapfen erzwingt ein Zwangsentformen, das heißt, der innere Hohlraum wird durch ein dornartiges Formteil und die Außenform des Zapfens durch ein hülsenförmiges Formteil erzeugt, wobei die Innenform der Hülse die spätere Außenkontur des Zapfens realisiert.

Bei dem durch die US-A-4 125 246 bekannte Eimerform ist entweder eine plastische Verformung notwendig, um einerseits zu entformen und andererseits ein zapfenendseitiges Sicherungselement zu realisieren. Diese notwendig bleibende plastische Verformung bedingt, daß genau der Zeitpunkt abgepaßt werden muß, in dem die Masse gerade noch plastisch verformbar ist. Dies wird in der Praxis zu Qualitätsproblemen führen, da die diesen Zustand beeinflussenden Störgrößen vielfältig sind.

Eine andere Ausführungsform erfordert eine elastische Entformung, bei der eine plastische Verformung unerwünscht ist. Dies erhöht die Wartezeit bis zum Entformen, da mit Sicherheit gewartet werden muß, bis der plastische Verformungszustand überwunden ist. Außerdem werden bei dem Schritt des Zwangsentformens grundsätzlich zwei Wege erforderlich. Entweder muß das Innenteil, das heißt der Dorn, und anschließend das Außenteil, das heißt die Hülse, entfernt werden oder umgekehrt. In jedem Fall sind zwei nacheinander folgende Arbeitsschritte erforderlich. Durch die Einhaltung der Verformungszustände und die Arbeitsschritte beim Zwangsentformen wird die Zykluszeit erhöht, was sich insbesondere bei der Massenfertigung derartiger Eimer nachteilig bemerkbar macht.

Der Erfindung liegt nunmehr die Aufgabe zugrunde, einen Kunststoffeimer anzugeben, der es unter Beibehaltung guter Trageeigenschaften erlaubt, den Herstellungsaufwand durch Verringerung der Zykluszeit und der Werkzeugkosten zu minimieren.

Gemäß der Erfindung wird die Aufgabe dadurch gelöst, daß das Sicherungselement als ein am äußeren Ende des Zapfens mit mindestens einer Anbindung angeformter Sicherungsring ausgeführt ist und daß weitere Anbindungen zwischen Tragebügelöse und Zapfen unmittelbar nach Herstellung des Kunststoffeimers und vor Benutzung des Tragebügels mit den Anbindungen zwischen Sicherungsring und Zapfen in axialer Richtung des Zapfens fluchten.

Durch eine derartige Gestaltung des Kunststoffeimers wird erreicht, daß eine einstückige Herstellung möglich ist, da das Kunststoffmaterial beim Spritzgießen des Kunststoffeimers sowohl den Hohlraum des Eimerkörpers als auch die Hohlräume der Zapfen und über die Hohlräume für die Anbindungen auch den Hohlraum des Tragebügels mit seinen Tragebügelösen füllt.

Da die Außenkontur des Tragebügels und der Tragebügelösen in der Hohlform und in der Matrize geformt werden kann, ist nur die Außenform des Zapfens und die Trennung zwischen den Tragebügelösen durch zusätzliche Formenelemente zu gestalten. Die Gestaltung des Zapfens sichert jedoch, daß diese Zusatzformenelemente sehr einfach und kostengünstig gestaltet werden können.

Der erfindungsgemäße Sicherungsring weist dabei einen Außendurchmesser auf, der größer als der Innendurchmesser der Tragebügelöse ist. Damit verhindert er ein seitliches Herausrutschen der Tragebügelösen von den Zapfen, wenn der Tragebügel verwendet wurde und damit die Anbindungen gebrochen sind. Da dieser Sicherungsring nur über zwei Anbindungen mit dem Zapfen verbunden ist, behindert er ein zapfenbildendes Zusatzformenelement nicht, weshalb dessen einfache Ausgestaltung erhalten bleibt.

Bei einer günstigen Ausgestaltung der Erfindung ist vorgesehen, daß die Zapfen von je einer mit dem Tragebügel verbundenen Tragebügelöse umringt werden, welche über mindestens je eine Anbindung, die als Sollbruchstelle ausgebildet ist, mit dem Zapfen verbunden sind.

Grundsätzlich kann die Fixierung des Tragebügels vor dem Trennen der Anbindungen auch als Originalitätsverschluß verwendet werden. Wenn die Gestaltung des Eimers derart erfolgt, daß ein Öffnen eines die Oberseite verschließenden Deckels nur nach einem Abreißen des Tragebügels von seinen Anbindungen möglich ist, kann der Eimerinhalt nicht durch ein äußerlich sichtbares Zeichen - in diesem Falle die gebrochenen Anbindungen - verändert werden. Dann ist die Originalität des Eimerinhalts bei fixiertem Tragebügel gesichert.

Es ist weiterhin günstig, den Tragebügel so zu gestalten, daß dieser über mindestens eine als Sollbruchstelle ausgebildete Anbindung direkt mit dem oberen Rand verbunden ist.

Somit werden zusätzliche Anbindungen geschaffen, die einerseits beim Spritzgießen das Füllen des Hohlraumes des Tragebügels erleichtern, da von mehreren Stellen Spritzgußmaterial in den Hohlraum eindringen kann und die andererseits die Fixierung des Tragebügels vor dessen Gebrauch begünstigen.

Nach einer weiteren Fortbildung der erfindungsgemäßen Lösung ist vorgesehen, daß der Tragebügel als Originalitätsverschluß derart ausgebildet ist, daß er ein Öffnen eines die Oberseite verschließenden Deckels nur durch zu unterbrechende Anbindungen ermöglicht. Damit wird jedermann sichtbar, wenn sich beispielsweise der gefüllte Kunststoffeimer beim Verkauf nicht mehr im Originalzustand befindet.

Nach einer weiteren günstigen Ausgestaltung der Erfindung ist vorgesehen, daß in dem Bereich des Randes, in dem der Tragebügel über die Anbindungen mit dem oberen Rand verbunden ist, eine Lasche als ein Teil des Randes ausgebildet ist, die um einen kleinen Betrag nach außen gezogen, vom übrigen Rand getrennt und nur über als Sollbruchstellen ausgebildete Anbindungen mit dem Rand verbunden ist.

Damit wird erreicht, daß, um an den Inhalt des erfindungsgemäßen Kunststoffeimers zu gelangen, der Tragebügel zuerst von seinen Anbindungen abgerissen werden muß, um an die Lasche zu gelangen und diese unter Bruch ihrer Anbindungen zu entfernen. So wird für jedermann eine eventuelle unbefugte Benutzung sichtbar.

Die Erfindung soll nachfolgend anhand eines Ausführungsbeispieles näher erläutert werden. In den zugehörigen Zeichnungen zeigt
- Fig. 1: eine Seitenansicht eines erfindungsgemäßen Kunststoffeimers mit einem Teilschnitt,
- Fig. 2: eine vergrößerte Detaildarstellung eines Zapfens,
- Fig. 3: eine Draufsicht auf einen erfindungsgemäßen Kunststoffeimer,
- Fig. 4: einen Schnitt durch einen erfindungsgemäßen Kunststoffeimer entlang der Linie IV-IV in Fig. 3,
- Fig. 5: eine vergrößerte Teildarstellung des Schnittes entlang der Linie V-V in Fig. 3,
- Fig. 6: eine vergrößerte Teilansicht des erfindungsgemäßen Kunststoffeimers mit einem Originalitätsverschluß,
- Fig. 7: eine vergrößerte Teildarstellung eines Schnittes entlang der Linie VII-VII in Fig. 3,
- Fig. 8: einen Teilschnitt durch die Zapfenanordnung eines erfindungsgemäßen Kunststoffeimers anderer Ausführungsform,
- Fig. 9: eine Vorderansicht eines Zapfens mit konisch erweitertem Zapfenende,
- Fig. 10: einen Schnitt durch einen Zapfen gemäß Fig. 5 entlang der Linie X-X und
- Fig. 11: einen Schnitt durch einen Zapfen gemäß Fig. 9 vor dem Ausformen.

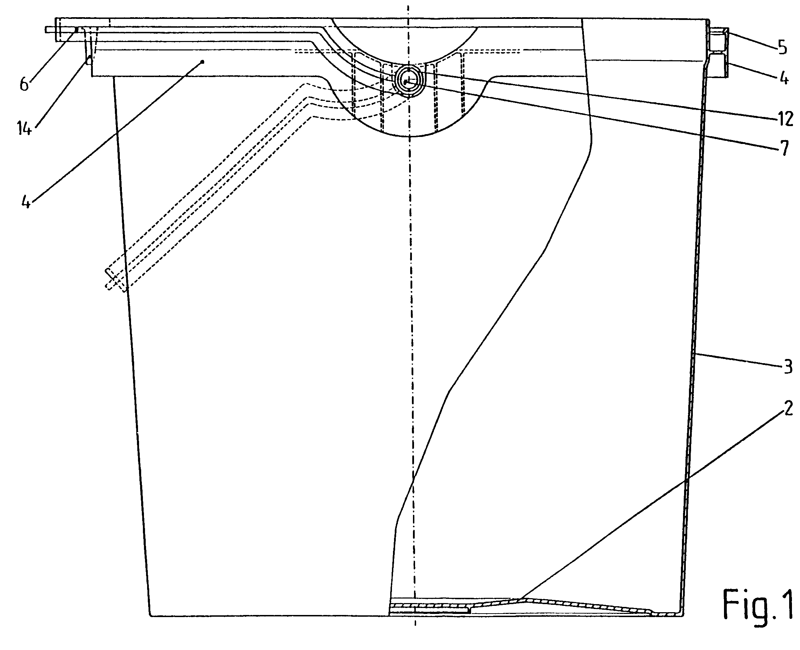

Wie aus Figur 1 ersichtlich, hat der Kunststoffeimer 1 eine im wesentlichen zylindrische Grundform und weist einen Boden 2 und eine sich nach oben hin leicht konisch erweiternde Wand 3 auf. An der Oberseite der Wand ist der Kunstoffeimer 1 mit einem Rand 4 versehen, der mit der Wand 3 verbunden ist und eine stabilisierende und kraftaufnehmende Funktion besitzt.

Dieser Rand 4 stellt im Querschnitt ein T-Profil dar. Der nach oben weisende Schenkel des T-Profiles ist teilweise mit einer zur Wand hin weisenden Rastnase 5 versehen, in die ein nicht näher dargestellter Deckel mit einem in den Zwischenraum zwischen Rand 4 und Wand 3 greifenden Deckelrand einrasten kann.

Der Rand 4 ist an diametral gegenüberliegenden Stellen mit Aufnahmeelementen für einen Tragebügel 6 versehen.

Im Bereich dieser Aufnahmelemente ist der Rand 4 nach unten gezogen, um somit die klemmfreie Stapelbarkeit mehrerer gleichartiger Kunststoffeimer zu gewährleisten.

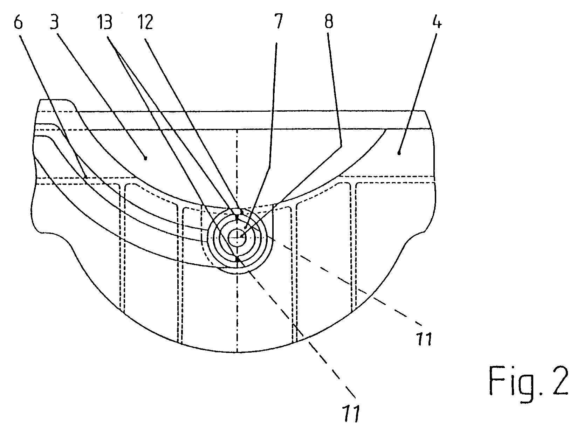

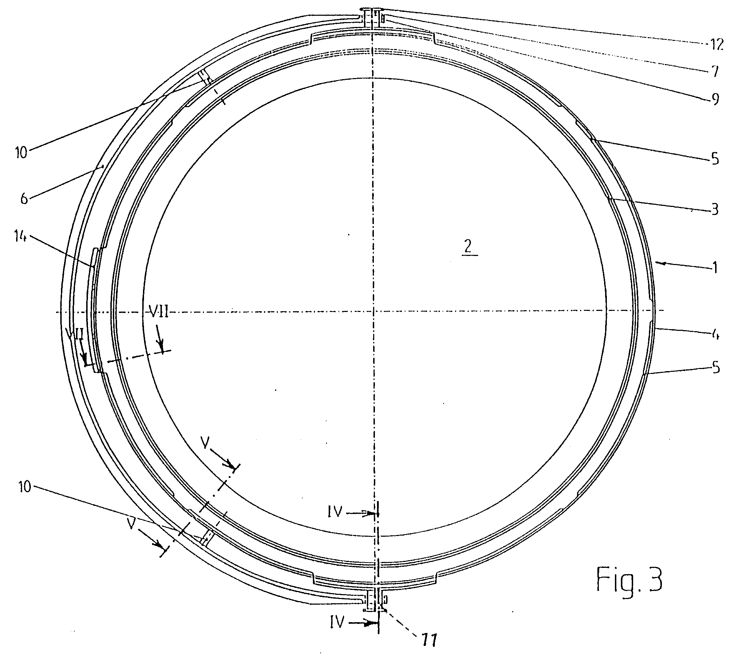

Wie insbesondere aus Fig. 2 und Fig. 3 ersichtlich wird, sind die Aufnahmeelemente als Zapfen 7 ausgebildet, die in ihrem Inneren einen zylindrischen Hohlraum 8 aufweisen.

Die Zapfen 7 werden von Tragebügelösen 9 umschlossen, die an dem Tragebügel 6 endseitig angegossen sind.

Einerseits zum Zwecke des Materialflusses beim Spritzgießvorgang und andererseits zum Fixieren des Tragebügels 6 vor einer Benutzung desselben ist der Tragebügel 6 über Anbindungen 10 unmittelbar und mit Anbindungen 11 mittelbar über die Tragebügelösen 9 und die Zapfen 7 mit dem Rand 4 des Kunststoffeimers 1 verbunden.

Die Anbindungen 10 und 11 sind als Sollbruchstellen ausgebildet, die bei einer Benutzung des Tragebügels 9 durchtrennt werden können.

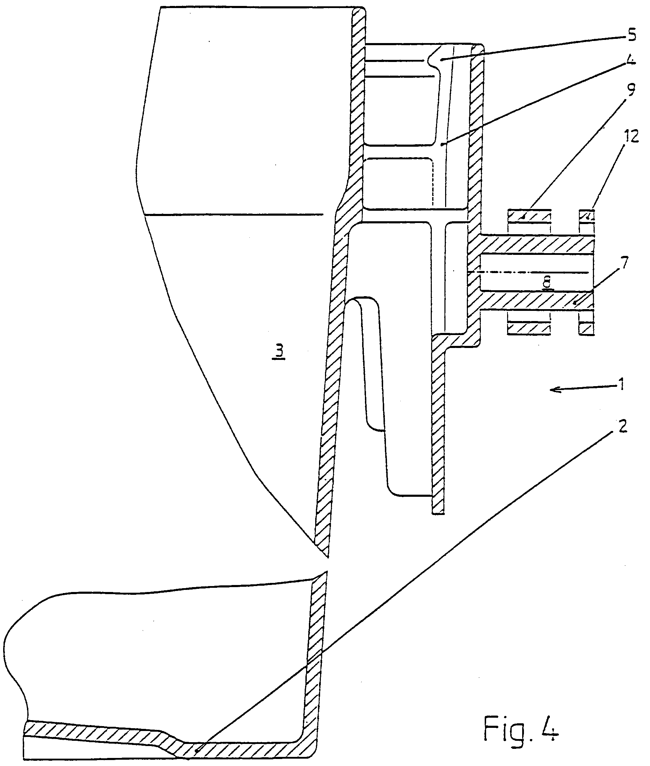

Wie insbesondere aus Fig. 4 ersichtlich ist, ist der Zapfen 7 zur Verhinderung des seitlichen Herausrutschens der Tragebügelösen 9 von den Zapfen 7 bei der Benutzung des Tragebügels 6, wenn die Anbindungen 10 und 11 durchtrennt sind, mit einem Sicherungsring 12 versehen, der über zwei stabile Anbindungen 13 mit dem Zapfen verbunden ist.

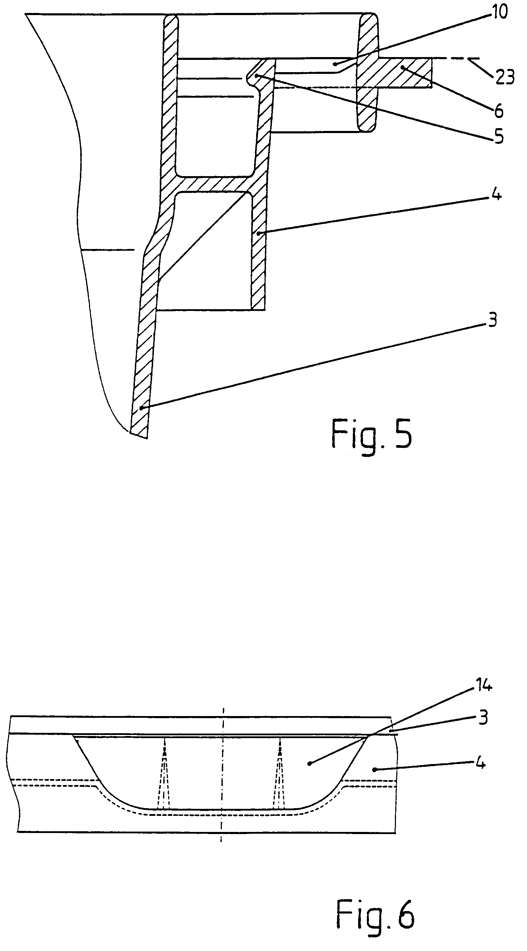

Aus Fig. 5 ist ersichtlich, daß der Tragebügel 6 zur Erhöhung der Stabilität größtenteils einen T-förmigen Querschnitt aufweist, wobei zur Verbesserung der Trageeigenschaften die Flachseite des T-Profiles die Grifffläche darstellt.

Da ein erfindungsgemäßer Kunstoffeimer 1 bei seiner Erstbenutzung zumeist gleichzeitig als Verkaufsverpackung dient, wird es regelmäßig vom Käufer gewünscht, zu erkennen, ob eine Veränderung des Inhalts des Kunstoffeimers vor dem Kauf erfolgt sein kann, die nicht vom Hersteller vorgenommen wurde. Diesem Zwecke dienen sogenannte Originalitätsverschlüsse. Diese müssen zumeist irreversibel entfernt werden, um zu dem Inhalt der Verkaufsverpackung zu gelangen.

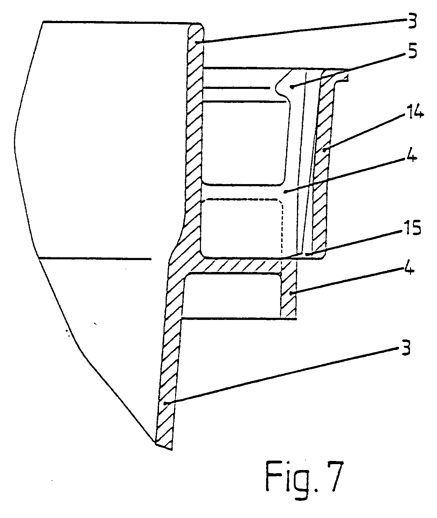

In den Figuren 6 und 7 ist ein solcher Originalitätsverschluß dargestellt, wie er an dem erfindungsgemäßen Kunststoffeimer realisiert worden ist.

In dem Bereich des Randes 4, in dem der Tragebügel 9 über die Anbindungen 10 mit dem Rand 4 verbunden ist, ist eine Lasche 14 als ein Teil des Randes 4 um einen kleinen Betrag nach außen gezogen, vom übrigen Rand getrennt und nur über Anbindungen 15 mit dem Rand 4 verbunden. Auch in diesem Falle sind die Anbindungen 15 als Sollbruchstellen ausgebildet.

Da, wie bereits dargestellt, der Deckel mit einem Rand zwischen Wand 3 und Rand 4 greift, und ansonsten glatt gestaltet ist, kann dieser Deckel nicht entfernt werden, ohne daß die Möglichkeit besteht, von unten unter den Deckelrand zu greifen und diesen über die Rastnasen 5 zu heben.

Um nunmehr an den Inhalt des erfindungsgemäßen Kunststoffeimers zu gelangen, ist es notwendig, den Tragebügel 6 zuerst von seinen Anbindungen 10 und 11 abzureißen. Damit ist es möglich an die Lasche 14 zu gelangen und diese unter Bruch ihrer Anbindungen 15 zu entfernen. Erst dann besteht die Möglichkeit, unter den nicht näher dargestellten Deckel zu greifen und diesen abzuheben.

Als Originalitätsverschluß dient in diesem Falle einerseits der Tragebügel 6 und andererseits die Lasche 14.

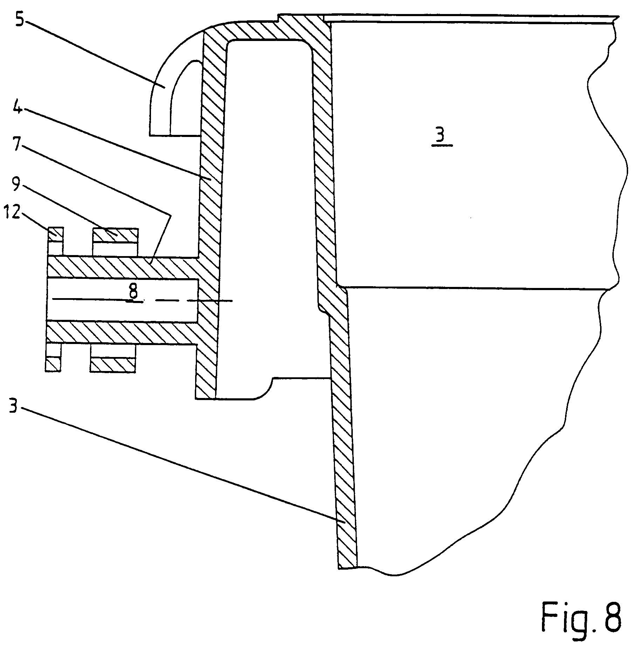

In Fig. 8 ist ein Teilschnitt einer Zapfenanordnung eines erfindungsgemäßen Kunststoffeimers 1 in einer anderen Ausführungsform dargestellt. Dabei ist der Zapfen 7, in gleicher Weise wie vorangehend dargestellt, mit dem Rand 4 verbunden.

Daraus wird ersichtlich, daß die Anordnung und Ausführung des Zapfens 7 unabhängig von der Gestaltung des Randes 4 ist. Somit wäre auch eine Anordnung des Zapfen 7 direkt an der Wand 3 möglich, was besonders für sehr preiswerte Kunststoffeimer in Frage kommt, bei denen zur Stabilisierung vielleicht nur der obere Teil der Wand verstärkt und als Rand 4 ausgebildet ist.

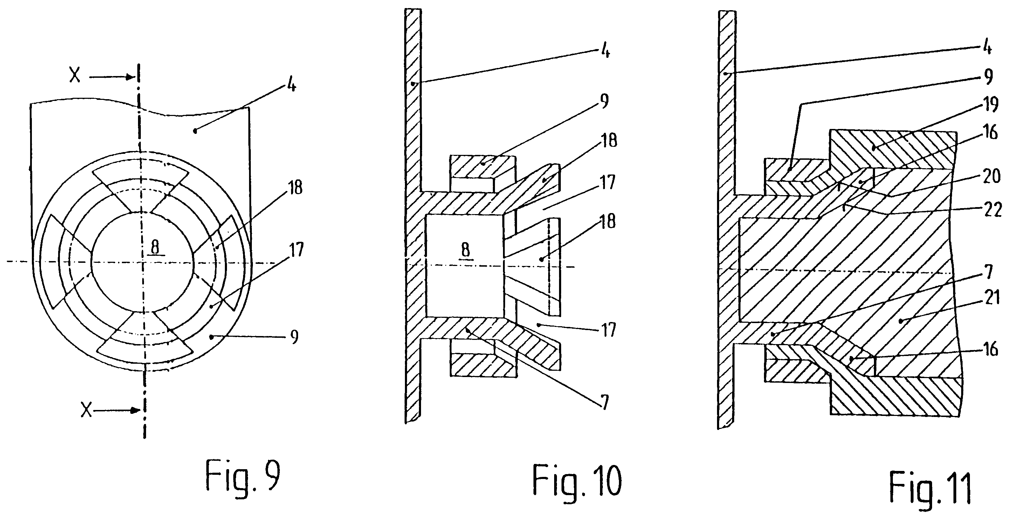

Eine besonders zweckmäßige Ausführung eines Zapfens 7 und einer Tragebügelöse 9 ist in den Figuren 9 bis 11 dargestellt.

Dabei ist der Zapfen 7 hohl und weist endseitig eine konische Erweiterung 16 auf. Im Bereich der konischen Erweiterung 16 ist der Zapfen 7 in axialer Richtung viermal geschlitzt. Die Schlitze 17 trennen die konische Erweiterung in vier Konuselemente 18, die in ihrer Gesamtheit ein Herabrutschen der Tragebügelösen 6 von den Zapfen 7 verhindern.

Bei der Herstellung eines spritzgegossenen Kunststoffeimers 1 wird in bekannter Art und Weise aus einer Hohlform und einer Matrize ein die herzustellende Eimerform verkörpernder Hohlraum gebildet. In diesen Hohlraum wird eine sich verfestigende Kunststoffmasse eingespritzt.

Nach dem Aushärten der Kunststoffmasse werden in einem Ausformungsvorgang die beiden Formenhälften voneinander getrennt. Dabei ist es wichtig, daß die Form so konzipiert ist, daß auch alle Formteile des fertigen Kunststoffeimers 1 wieder rückstandslos aus der Form entfernt werden können.

Aus diesem Grunde wird die Trennung der Formenteile entlang der Trennungslinie 23, die in Fig. 5 ersichtlich ist, vorgenommen.

Die Tragebügelöse 9 und der Zapfen 7 weisen jedoch eine Form auf, die nicht ohne zusätzliche Mittel herstellbar sind, da sie nicht entformbar wären. Aus diesem Grunde werden an den Stellen der die Tragebügelösen 9 verkörpernden Formteile in den Hohlraum der Tragebügelösen 9 ragende zapfenformende Hülsen eingeführt.

Zur Bildung des Hohlraumes 8 wird innerhalb der Hülse ein Kern mit eingebracht.

Vor dem Trennen der Formenteile wird der Kern und die Hülse aus der Form gezogen, so daß ein ungehindertes Ausformen auch mit dem ausgebildeten Zapfen 7 und der Tragebügelöse 9 möglich ist.

Bei der Herstellung eines Zapfens entsprechend der Figuren 9 und 10 wird eine in den Hohlraum der Tragebügelösen 9 ragende zapfenformende Hülse 19 mit einer konischen Erweiterung der Innenkontur 20 eingeführt. An der Außenseite weist die Hülse 19 eine die Tragebügelöse 9 bildende Außenkontur auf.

Zur weiteren Ausbildung der Konuselemente 18 wird ein mit dem Hülseninneren einen Hohlraum bildender Kern 21 mit einer zapfenendseitig liegenden konischen Erweiterung 22 und in diesem Bereich in axialer Richtung verlaufenden schlitzbildenden Stegen eingebracht wird.

Nach dem Aushärten der Kunststoffmasse wird zuerst der Kern 21 und danach die Hülse 19 unter Ausnutzung der Elastizität der Konuselemente 18 herausgezogen.

### Bezugszeichenliste

- 1: Kunststoffeimer
- 2: Boden
- 3: Wand
- 4: Rand
- 5: Rastnase
- 6: Tragebügel
- 7: Zapfen
- 8: Hohlraum
- 9: Tragebügelöse
- 10: Anbindungen zwischen Tragebügel und Rand
- 11: Anbindungen zwischen Tragebügelöse und Zapfen
- 12: Sicherungsring
- 13: Anbindungen zwischen Sicherungsring und Zapfen
- 14: Lasche
- 15: Anbindung zwischen Lasche und Rand
- 16: konische Erweiterung
- 17: Schlitz
- 18: Konuselement
- 19: Hülse
- 20: Erweiterung der Innenkontur der Hülse
- 21: Kern
- 22: konische Erweiterung des Kerns
- 23: Trennungslinie

## Patentansprüche

1. Spritzgegossener Kunststoffeimer (1) mit einem Boden (2), einer sich von diesem zum oberen Rand (4) hin konisch erweiternden Wand (3) und mit einem Tragebügel (6), wobei der obere Rand (4) der Wand (3) an diametral gegenüberliegenden Stellen mit Aufnahmeelementen für einen Tragebügel (6) versehen ist, die aus am oberen Rand (4) nach außen ragende angeformte Zapfen (7) bestehen, die endseitig mit Sicherungselementen zur Verhinderung des seitlichen Herausrutschens der Tragebügelösen (9) versehen sind und die von je einer mit dem Tragebügel (6) verbundenen Tragebügelöse (9) umringt werden, **dadurch gekennzeichnet,** daß das Sicherungselement als ein am äußeren Ende des Zapfens (7) mit mindestens einer Anbindung (13) angeformter Sicherungsring (12) ausgeführt ist und daß weitere Anbindungen (11) zwischen Tragebügelöse (9) und Zapfen (7) unmittelbar nach Herstellung des Kunststoffeimers (1) und vor Benutzung des Tragebügels (6) mit den Anbindungen (13) zwischen Sicherungsring (12) und Zapfen (7) in axialer Richtung des Zapfens (7) fluchten.

2. Spritzgegossener Kunststoffeimer nach Anspruch 1, **dadurch gekennzeichnet,** daß die Tragebügelöse (9) über mindestens eine Anbindung (11), die als Sollbruchstelle ausgebildet ist, mit dem Zapfen (7) verbunden ist.

3. Spritzgegossener Kunststoffeimer nach Anspruch 1 oder 2, **dadurch gekennzeichnet,** daß der Tragebügel (6) über mindestens eine als Sollbruchstelle ausgebildete Anbindung (10) direkt mit dem oberen Rand (4) verbunden ist.

4. Spritzgegossener Kunststoffeimer nach Anspruch 3**, dadurch gekennzeichnet,** daß der Tragebügel (6) als Originalitätsverschluß derart ausgebildet ist, daß er ein Öffnen eines die Oberseite verschließenden Deckels nur durch Unterbrechung der Anbindungen (10, 11) mit den Zapfen (7) bzw. dem oberen Rand (4) ermöglicht.

5. Spritzgegossener Kunststoffeimer nach Anspruch 3, **dadurch gekennzeichnet**, daß in dem Bereich des Randes (4), in dem der Tragebügel (6) über die Anbindungen (10) mit dem oberen Rand verbunden ist, eine Lasche (14) als ein Teil des Randes (4) ausgebildet ist, die, um einen kleinen Betrag nach außen gezogen, vom übrigen Rand (4) getrennt und nur über als Sollbruchstellen ausgebildete Anbindungen (15) mit dem Rand (4) verbunden ist.

## Claims

1. Injection-moulded plastic bucket (1) with a bottom (2), a wall (3) expanding conically from there to the upper edge (4), and with a carrying handle (6), where the upper edge (4) of the wall (3) is provided with receiving elements for a carrying handle (6) at diametrically opposite points, consisting of outward-projecting pins (7), integrally moulded on the upper edge (4), the ends of the pins being provided with securing elements to prevent the carrying handle eyes (9) from slipping off laterally and each being encircled by a carrying handle eye (9) connected to the carrying handle (6), characterised in that the retaining element is designed as a retaining ring (12), integrally moulded on the outer end of the pin (7) with at least one tie (13), and that further ties (11) between carrying handle eye (9) and pin (7) are in line with the ties (13) between retaining ring (12) and pin (7) in the axial direction of the pin (7) directly after manufacture of the plastic bucket (1) and prior to use of the carrying handle (6).

2. Injection-moulded plastic bucket as per Claim 1, characterised in that the carrying handle eye (9) is connected to the pin (7) via at least one tie (11) designed as a predetermined breaking point.

3. Injection-moulded plastic bucket as per Claims 1 or 2, characterised in that the carrying handle (6) is connected directly to the upper edge (4) via at least one tie (10) designed as a predetermined breaking point.

4. Injection-moulded plastic bucket as per Claim 3, characterised in that the carrying handle (6) is designed as an original seal in such a way that it permits an opening of a lid sealing the upper side only by means of breakage of the ties (10, 11) with the pins (7) and the upper edge (4), respectively.

5. Injection-moulded plastic bucket as per Claim 3, characterised in that in the area of the edge (4) in which the carrying handle (6) is connected to the edge via the ties (10), a tab (14) is designed as part of the edge (4), extending outward by a small amount, being separate from the rest of the edge (4) and only connected to the edge (4) via ties (15) designed as a predetermined breaking points.

## Revendications

1. Seau (1) en plastique moulé par injection, comprenant un fond (2), une paroi (3) qui s'élargit en cône à partir de celui-ci jusqu'au bord supérieur (4), et une anse de portage (6), le bord supérieur (4) de la paroi (3) étant muni, en des points diamétralement opposés, d'éléments de réception pour l'anse de portage (6), éléments qui sont constitués par des goujons (7) qui sont moulés en saillie vers l'extérieur sur le bord supérieur (4), sont munis, vers leur extrémité, d'éléments d'arrêt pour empêcher que les anneaux (9) de l'anse de portage ne s'échappent en glissant latéralement, et sont entourés chacun par un anneau (9) raccordé à l'anse de portage (6), caractérisé en ce que l'élément d'arrêt est réalisé sous la forme d'une bague d'arrêt (12) qui est moulée avec au moins un point de liaison (13) sur l'extrémité externe du goujon (7), et en ce qu'immédiatement après la fabrication du seau en plastique (1) et avant l'utilisation de l'anse de portage (6), d'autres points de liaison (11) entre l'anneau (9) de l'anse de portage et le goujon (7) sont dans l'alignement des points de liaison (13) entre la bague d'arrêt (12) et le goujon (7) dans la direction axiale du goujon (7).

2. Seau en plastique moulé par injection selon la revendication 1, caractérisé en ce que l'anneau (9) de l'anse de portage est relié au goujon (7) par au moins un point de liaison (11) qui est réalisé sous forme de point destiné à la rupture.

3. Seau en plastique moulé par injection selon la revendication 1 ou 2, caractérisé en ce que l'anse de portage (6) est reliée directement au bord supérieur (4) par au moins un point de liaison (10) réalisé sous forme de point destiné à la rupture.

4. Seau en plastique moulé par injection selon la revendication 3, caractérisé en ce que l'anse de portage (6) est réalisée sous forme de fermeture de garantie d'origine, en ce sens qu'elle ne rend possible une ouverture du couvercle qui ferme le haut du seau, que par rupture de ses points de liaison (10, 11) avec les goujons (7) et avec le bord supérieur (4).

5. Seau en plastique moulé par injection selon la revendication 3, caractérisé en ce que, dans la région du bord (4) dans laquelle l'anse de portage (6) est reliée au bord supérieur par les points de liaison (10), il est formé, en tant que partie du bord (4), une languette (14) qui, s'écartant vers l'extérieur dans une faible mesure, est séparée du reste du bord (4) et n'est reliée à celui-ci que par des points de liaison (15) réalisés sous forme de points destinés à la rupture.
